(19) Europäisches Patentamt
European Patent Office
Office européen des brevets

(11) **EP 3 108 569 B1**

(12) **FASCICULE DE BREVET EUROPEEN**

(45) Date de publication et mention de la délivrance du brevet:
**24.10.2018 Bulletin 2018/43**

(51) Int Cl.:
***H02J 50/27*** *(2016.01)*    ***H02M 1/12*** *(2006.01)*
***H02M 7/10*** *(2006.01)*

(21) Numéro de dépôt: **15705572.4**

(22) Date de dépôt: **12.02.2015**

(86) Numéro de dépôt international:
**PCT/EP2015/053031**

(87) Numéro de publication internationale:
**WO 2015/121388 (20.08.2015 Gazette 2015/33)**

(54) **DISPOSITIF DE CONVERSION D'ENERGIE RADIOFREQUENCE EN COURANT CONTINU (ANTENNE RREDRESSEUSE) ET CAPTEUR CORRESPONDANT**

VORRICHTUNG ZUR UMWANDLUNG VON RADIOFREQUENTER ENERGIE IN GLEICHSTROM (RECTENNA) UND EMPFÄNGER

RADIOFREQUENCY TO DC ENERGY CONVERSION DEVICE (RECTENNA) AND RECEIVER THEREFOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2014 FR 1451192**

(43) Date de publication de la demande:
**28.12.2016 Bulletin 2016/52**

(73) Titulaire: **Institut Mines-Telecom
29238 Brest Cedex 3 (FR)**

(72) Inventeurs:
• **KUHN, Véronique
  F-29280 Plouzane (FR)**
• **SEGUIN, Fabrice
  F-29600 Morlaix (FR)**
• **LAHUEC, Cyril
  F-29810 Lampaul Plouarzel (FR)**
• **PERSON, Christian
  F-29290 Saint Renan (FR)**

(74) Mandataire: **Gevers & Orès
  41 avenue de Friedland
  75008 Paris (FR)**

(56) Documents cités:
**US-A1- 2011 242 863**

**Description**

## 1. Domaine de l'invention

Le domaine de l'invention est celui de la récupération d'énergie.

Plus précisément, l'invention concerne une technique permettant de convertir de l'énergie radiofréquence en courant continu ou en tension continue, pour alimenter par exemple des circuits électroniques.

L'invention trouve notamment des applications dans le domaine de l'alimentation de capteurs filaire ou sans fil, par exemple dans le domaine du textile (capteurs portés sur les vêtements des personnes), médical (implants biomédicaux, stimulateur cardiaque, thermomètre, etc), de la météo (stations météo à distance, thermomètre, etc), du sport (cardiofréquencemètre, accéléromètre, oxymètre, etc), de l'identification radiofréquence (en anglais RFID pour « RadioFrequency Identification »), de la téléphonie mobile (recharge de la batterie, etc), de la surveillance, etc.

## 2. Art antérieur

La diminution de la consommation des composants électroniques a permis l'essor d'applications mobiles, telles que les capteurs sans fil. La plupart de ces capteurs, ou réseaux de capteurs sans fil (en anglais WSN pour « Wireless Sensor Network »), tels que ceux portés par la personne (en anglais BSAN, pour « Body Sensor Area Network ») sont alimentés par des batteries/piles. Les capteurs sans fil RFID, qui sont les plus couramment utilisés, consomment des dizaines de microwatts en mode veille et plusieurs centaines de microwatts en mode actif.

Même si des progrès notables ont été enregistrés au cours de ces dernières années, les batteries ont encore une durée de vie limitée et leur mise en oeuvre peut être problématique en fonction de leur accessibilité et des contraintes de volume (notamment pour les implants médicaux sous cutanés).

On cherche donc à explorer d'autres alternatives pour alimenter ces capteurs, par exemple en récupérant l'énergie disponible dans l'environnement ambiant. Ainsi, les gradients thermiques, les vibrations mécaniques, les ondes lumineuses ou radiofréquences notamment, constituent des sources potentielles d'énergie pour l'alimentation de ces capteurs.

En particulier, les sources radiofréquences présentent l'avantage d'être omniprésentes dans notre vie quotidienne, particulièrement en milieu urbain. En effet, une multitude de normes de communication sans fil a conduit à la prolifération des émetteurs radio tels que GSM (900 MHz, 1800 MHz), UMTS (2,1 GHz) et WiFi (2,4 GHz). Par conséquent, ces énergies radiofréquences, transmises en continu par les réseaux de télécommunication, sont rendues disponibles sur une large plage de fréquences.

L'objectif de la récupération d'énergie radiofréquence est de convertir l'énergie provenant de sources ambiantes radiofréquences en tension et courant continus. L'élément de base assurant cette conversion est appelé convertisseur RF-DC, antenne redresseuse, ou encore « rectenna », de l'anglais « Rectifying antenna ».

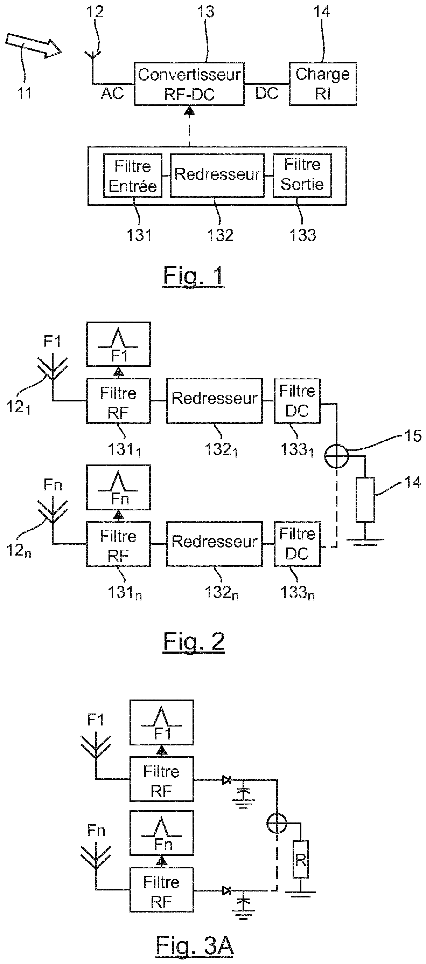

La figure 1 présente ainsi un schéma de principe d'un récupérateur d'énergie radiofréquence.

Selon ce schéma, des ondes radiofréquences 11 sont reçues par une antenne de réception 12, puis converties en tension et courant continus par un convertisseur RF-DC 13. Le courant ainsi généré peut être utilisé pour alimenter une charge 14, qui représente par exemple un capteur à alimenter.

Plus précisément, le convertisseur RF-DC 13 comprend un filtre d'entrée 131, encore appelé filtre radiofréquence (RF) ou filtre haute fréquence (HF), un redresseur 132 et un filtre de sortie 133, encore appelé filtre DC. Le filtre d'entrée 131 est placé entre l'antenne de réception 12 et le redresseur 132. C'est un filtre passe-bas qui est utilisé pour bloquer les harmoniques indésirables. Plusieurs types de redresseurs sont envisageables en fonction principalement de la puissance incidente et de la fréquence. Afin de choisir correctement une topologie, un compromis entre la tension de sortie en charge et l'efficacité de conversion doit être effectué, comme décrit dans le document « A multi-tone RF energy harvester in body sensor area network context » de V.Kuhn, F.Seguin, C.Lahuec et C.Person, IEEE LAPC conference, Lougborough, Novembre 2013.

Plusieurs types de convertisseur RF-DC ont été proposés, adaptés à recevoir de l'énergie radiofréquence sur une ou plusieurs bandes de fréquence.

Ainsi, il a notamment été proposé des circuits de récupération d'énergie radiofréquence transmise dans une seule bande de fréquence, en utilisant une seule rectenna (par ex. US 2011/0242863 A1 divulgue un tel système, toutefois sans possibilité d'activer les étages de conversion selon la fréquence d'entrée).

On note cependant que la fonctionnalité d'une telle rectenna est considérablement dégradée si la fréquence de fonctionnement est modifiée à partir de la fréquence de résonance optimale. Ainsi, un inconvénient de ces circuits de récupération d'énergie radiofréquence transmise dans une seule bande de fréquence, mettant en oeuvre une unique rectenna, est qu'ils ne sont pas adaptés à l'environnement ambiant, dans lequel les fréquences dominantes sont différentes selon le lieu d'utilisation de la charge (par exemple selon le lieu du capteur).

Il a également été proposé des circuits de récupération d'énergie radiofréquence transmise dans plusieurs bandes de fréquence. En effet, il a notamment été démontré que lorsque plusieurs sources d'énergie radiofréquence émettant dans des bandes de fréquences différentes sont disponibles dans l'environnement ambiant, la quantité d'énergie récoltée peut être augmentée. Ainsi, comme illustré en figure 2, des réseaux de rectennas ont été proposés, dans lesquels plusieurs rectennas (fonctionnant à des fréquences différentes) sont mises en parallèle. Les sorties DC de chaque rectenna sont additionnées 15 entre elles de manière à augmenter la puissance récoltée.

Un inconvénient de ces circuits de récupération d'énergie radiofréquence transmise dans plusieurs bandes de fréquence, mettant en oeuvre plusieurs rectennas en parallèle, est qu'ils nécessitent la mise en oeuvre d'une sommation des tensions continues DC apportées par chaque bande de fréquence. Or cette sommation, si elle n'est pas correctement réalisée, peut détériorer drastiquement l'efficacité du circuit.

Plusieurs techniques ont été proposées pour mettre en oeuvre une telle sommation des tensions continues DC, utilisant des topologies d'interconnexions série ou différentielle.

L'association de redresseurs série pour effectuer la sommation, selon une première structure illustrée en figure 3A, peut présenter une efficacité de conversion RF/DC supérieure à celle d'un circuit à bande de fréquence unique. Ceci est possible uniquement si chaque branche de la structure est en fonctionnement, i.e. si des signaux radiofréquences sont reçus et traités sur chaque branche de la structure. En effet, si une des fréquences n'est pas présente sur la branche dédiée, celle-ci est vue comme une charge pour le reste du circuit. Elle détériore ainsi les performances globales du circuit.

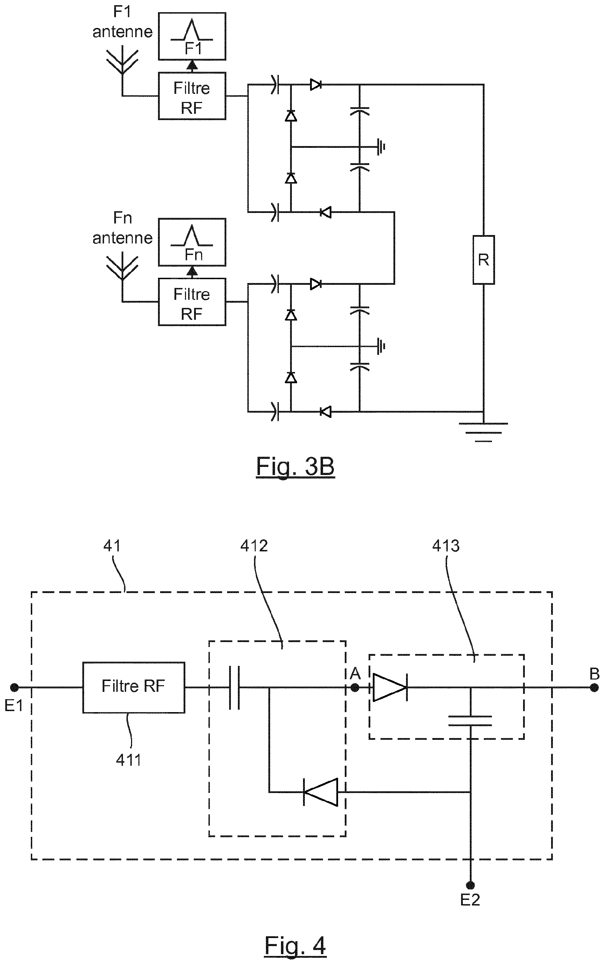

L'utilisation de redresseurs de type Greinacher pour effectuer la sommation, selon une deuxième structure illustrée en figure 3B, permet d'additionner les sorties DC sans interférences les unes par rapport aux autres. En effet, la sortie de chaque redresseur est différentielle. En revanche, un inconvénient d'une telle structure est qu'elle requiert une puissance incidente minimum de -10 dBm pour une architecture mettant en oeuvre deux redresseurs de type Greinacher. Or, dans un environnement urbain, la moyenne de la densité de puissance des bandes de fréquence est plus faible, c'est-à-dire inférieure à -10dBm. Ainsi, ce type d'architecture n'est pas adapté à la conversion d'énergie provenant de sources ambiantes radiofréquences en courant continu pour l'alimentation de charges.

Il existe donc un besoin pour un nouveau circuit de récupération d'énergie radiofréquence transmise dans une ou plusieurs bandes de fréquence ne présentant pas ces inconvénients de l'art antérieur.

### 3. Exposé de l'invention

L'invention propose une solution nouvelle qui ne présente pas l'ensemble de ces inconvénients de l'art antérieur, sous la forme d'un dispositif de conversion d'énergie radiofréquence en courant continu, recevant en entrée au moins un signal radiofréquence et générant en sortie un courant continu apte à alimenter au moins une charge.

Selon l'invention, un tel dispositif de conversion comprend au moins deux étages de conversion comprenant chacun :

- un module de filtrage radiofréquence, connecté à un premier noeud d'entrée dudit étage de conversion, configuré pour filtrer un desdits au moins un signal radiofréquence ;
- un module de décalage de tension, connecté entre un deuxième noeud d'entrée dudit étage de conversion, ledit module de filtrage radiofréquence et un noeud intermédiaire dudit étage de conversion, configuré pour déplacer une tension présente au niveau dudit premier noeud d'entrée sur ledit noeud intermédiaire ;
- un module de rectification de tension, connecté entre ledit noeud intermédiaire, ledit deuxième noeud d'entrée et un noeud de sortie dudit étage de conversion, configuré pour rectifier la tension dudit noeud intermédiaire et délivrer une tension rectifiée sur ledit noeud de sortie.

De plus, pour le premier étage de conversion, le deuxième noeud d'entrée est connecté à une tension de référence, et pour un étage de conversion supérieur (deuxième, troisième, etc), le deuxième noeud d'entrée est connecté au noeud de sortie d'un étage de conversion inférieur.

Enfin, le courant continu est généré sur le noeud de sortie du dernier étage de conversion.

L'invention propose ainsi un nouveau dispositif pour la récupération de l'énergie radiofréquence, permettant notamment d'alimenter des dispositifs électroniques comme des capteurs.

En particulier, le dispositif de conversion selon l'invention comprend plusieurs étages de conversion. Il est adapté à récupérer l'énergie radiofréquence transmise dans une seule bande de fréquence, en activant un seul étage de conversion (ou si un seul étage de conversion est disponible), et à récupérer l'énergie radiofréquence transmise dans plusieurs bandes de fréquence en activant plusieurs étages de conversion, un par bande de fréquence. On note que le nombre d'étages de conversion n'est pas limité.

Lorsque plusieurs étages de conversion sont activés, le dispositif de conversion proposé permet notamment d'assurer une sommation correcte des tensions continues DC apportées par chaque bande de fréquence présente. En particulier, la structure proposée permet d'additionner les sorties DC de chaque étage de conversion sans interférences les unes par rapport aux autres, même lorsque certains étages ne sont pas actifs, i.e. ne reçoive pas de signal radiofréquence.

De plus, le dispositif de conversion selon l'invention requiert une puissance incidente plus faible que les dispositifs de l'art antérieur pour pouvoir générer un courant continu (ou de façon équivalente une tension continue) apte à alimenter au moins une charge.

Selon un mode de réalisation particulier de l'invention, le module de décalage de tension met en oeuvre un premier condensateur, connecté entre le module de filtrage et le noeud intermédiaire, et une première diode, connectée en sens direct entre le deuxième noeud d'entrée et le noeud intermédiaire. Le module de rectification de tension met en oeuvre un deuxième condensateur, connecté entre le deuxième noeud d'entrée et le noeud de sortie, et une deuxième diode, connectée en sens direct entre le noeud intermédiaire et le noeud de sortie.

Ainsi, chaque étage de conversion met en oeuvre deux diodes en parallèle, montées tête-bêche. De ce fait, il suffit que l'on dispose d'une puissance suffisante pour dépasser le seuil d'une diode pour pouvoir générer un courant continu apte à alimenter au moins une charge. A titre de comparaison, l'utilisation de redresseurs de type Greinacher pour récupérer l'énergie radiofréquence transmise dans plusieurs bandes de fréquence repose sur la mise en oeuvre de plusieurs diodes en série, nécessitant une puissance incidente beaucoup plus élevée pour démarrer le circuit.

Le dispositif de conversion selon l'invention fonctionne donc avec des puissances incidentes plus faibles que les dispositifs de l'art antérieur.

De plus, le dispositif de conversion selon l'invention repose sur l'utilisation de deux fois moins de composants que les dispositifs de l'art antérieur, ce qui implique de plus faibles coûts de production.

Selon un aspect particulier de l'invention, les composants (diodes et condensateurs) sont des composants montés en surface (CMS). Un dispositif de conversion d'énergie selon l'invention est donc facilement réalisable et/ou détectable.

Selon une variante, ces composants peuvent être intégrés.

Un tel dispositif de conversion prend donc la forme d'un circuit électronique, qui peut être imprimé, intégré, etc.

Selon une autre caractéristique particulière de l'invention, les première et deuxième diodes présentent des valeurs sensiblement identiques.

Ainsi, au sein d'un même étage de conversion, les deux diodes montées en parallèle, tête-bêche, présentent des tensions de seuil sensiblement identiques. Ceci permet d'obtenir une symétrie au niveau d'un étage de conversion, optimisant le redressement.

Selon une variante, les diodes au sein d'un même étage de conversion, ou au sein des différents étages de conversion, présentent des tensions de seuil différentes.

Par exemple, les première et deuxième diodes sont des diodes Schottky.

De telles diodes permettent notamment d'éviter l'apparition de capacités parasites. Bien entendu, tout type de diode présentant une faible tension de seuil peut être utilisé (par exemple diode à jonction PN, etc).

Selon une caractéristique particulière de l'invention, le dispositif de conversion comprend au moins une antenne de réception du ou des signaux radiofréquences.

Un tel dispositif peut en effet être utilisé pour récupérer l'énergie radiofréquence véhiculée dans l'air ambiant.

Par exemple, le dispositif de conversion comprend une unique antenne de réception large bande.

De cette façon, on dispose d'une structure plus compacte, néanmoins adaptée à la réception de signaux radiofréquences disponibles dans plusieurs bandes de fréquence.

Selon une variante, le dispositif de réception comprend une antenne de réception distincte pour chaque étage de conversion, chaque antenne de réception étant adaptée à recevoir un signal radiofréquence dans une bande de fréquence donnée. Dans ce cas, chaque antenne de réception peut présenter une bande étroite.

Par exemple, le module de filtrage radiofréquence comprend un filtre radiofréquence appartenant au groupe comprenant :

- un filtre passe-bande centré sur la fréquence 900MHz ;
- un filtre passe-bande centré sur la fréquence 1800MHz ;
- un filtre passe-bande centré sur la fréquence 2,1GHz ;
- un filtre passe-bande centré sur la fréquence 2,4GHz.

Un tel dispositif de conversion est ainsi adapté à recevoir les bandes de fréquence GSM 900MHz et/ou GSM 1800MHz et/ou UMTS et/ou Wi-Fi.

Bien entendu, d'autres bandes de fréquence (de très basse fréquence à très haute fréquence) peuvent être écoutées pour récupérer l'énergie radiofréquence d'un ou plusieurs signaux radiofréquences.

Selon un autre mode de réalisation de l'invention, le ou les signaux radiofréquences sont reçus via une liaison filaire.

La présence d'antennes de réception est donc facultative. Dans ce cas, le ou les signaux radiofréquences peuvent être prélevés directement à la source. Par exemple, la source peut être un boîtier décodeur de type Livebox (marque déposée). Le dispositif de conversion d'énergie selon l'invention peut être directement connecté à ce boîtier décodeur par une liaison filaire.

L'invention concerne par ailleurs un capteur comprenant des moyens de collecte de données et des moyens de restitution des données collectées. Selon l'invention, un tel capteur comprend également un dispositif de conversion d'énergie radiofréquence en courant continu tel que décrit précédemment, recevant en entrée au moins un signal radiofréquence et générant en sortie un courant continu alimentant ce capteur.

Un tel capteur pourra bien sûr comporter les différentes caractéristiques relatives au dispositif de conversion d'énergie radiofréquence en courant continu selon l'invention, qui peuvent être combinées ou prises isolément. Ainsi, les caractéristiques et avantages de ce capteur sont les mêmes que ceux du dispositif de conversion et ne sont pas détaillés plus amplement.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, discutée en relation avec l'art antérieur, présente un schéma de principe d'un récupérateur d'énergie radiofréquence ;
- la figure 2, également décrite en relation avec l'art antérieur, illustre la récupération d'énergie sur plusieurs bandes de fréquence ;
- les figures 3A et 3B présentent deux exemples de convertisseurs RF-DC utilisés pour la récupération d'énergie sur plusieurs bandes de fréquence selon l'art antérieur ;
- la figure 4 illustre le principe général d'un dispositif de conversion d'énergie radiofréquence en courant continu selon l'invention ;
- les figures 5 et 6 présentent deux exemples de dispositifs de conversion d'énergie radiofréquence selon un mode de réalisation de l'invention ;
- les figures 7 et 8 illustrent les performances de l'invention ;
- la figure 9 illustre un exemple de capteur alimenté par un dispositif de conversion d'énergie radiofréquence en courant continu selon un mode de réalisation l'invention.

## 5. Description d'un mode de réalisation de l'invention

### 5.1 Principe général de l'invention

Le principe général de l'invention repose sur un nouveau dispositif de conversion d'énergie radiofréquence en courant continu (ou de façon équivalente en tension continue), recevant en entrée au moins un signal radiofréquence et générant en sortie un courant continu apte à alimenter au moins une charge.

La structure particulière du dispositif selon l'invention permet notamment de récupérer l'énergie radiofréquence présente sur une ou plusieurs bandes de fréquence, et d'assurer une sommation des tensions DC efficaces lorsque l'on récupère de l'énergie radiofréquence sur plusieurs bandes de fréquence.

En particulier, le dispositif proposé est formé par un ou plusieurs étages de conversion, apte à traiter chacun un signal radiofréquence reçu sur une bande de fréquence distincte. La sortie différentielle de chaque étage de conversion permet une sommation sans perte des tensions DC générées.

La figure 4 illustre plus précisément le principe général d'un dispositif de conversion selon l'invention, sous la forme d'un circuit électronique.

Un tel dispositif de conversion comprend au moins deux étages de conversion 41 comprenant chacun :

- un module de filtrage radiofréquence 411, connecté à un premier noeud d'entrée E1 de l'étage de conversion 41, configuré pour filtrer un signal radiofréquence. Un tel module de filtrage 411 comprend par exemple un filtre passe-bande centré sur la fréquence F1. Il est utilisé pour transmettre un maximum de puissance au reste du circuit dans la bande de fréquence désirée, et bloquer les harmoniques non désirables pour permettre un rendement de conversion optimal ;
- un module de décalage de tension 412, connecté entre un deuxième noeud d'entrée E2 de l'étage de conversion 41, le module de filtrage radiofréquence 411, et un noeud intermédiaire A, configuré pour déplacer une tension présente au niveau du premier noeud d'entrée E1 sur le noeud intermédiaire A de l'étage de conversion 41 ;
- un module de rectification de tension 413, connecté entre le noeud intermédiaire A, le deuxième noeud d'entrée E2, et un noeud de sortie B, configuré pour rectifier la tension du noeud intermédiaire A et délivrer une tension rectifiée sur le noeud de sortie B de l'étage de conversion 41.

En particulier, on note que le deuxième noeud d'entrée E2 est connecté soit à une tension de référence, soit au noeud de sortie d'un autre étage de conversion.

Lorsque le dispositif comprend plusieurs étages de conversion, le deuxième noeud d'entrée E2 du premier étage est connecté à une tension de référence, par exemple à la masse ou à une référence 1V, et les deuxièmes noeuds d'entrée E2 des autres étages sont connectés aux noeuds de sortie B des étages inférieurs (le deuxième noeud d'entrée du deuxième étage est connecté au noeud de sortie du premier étage, le deuxième noeud d'entrée du i-ème étage est connecté au noeud de sortie du (i-l)ème étage, etc.

De plus, le courant continu apte à alimenter au moins une charge est généré sur le noeud de sortie B de l'étage de conversion si ce noeud de sortie n'est pas connecté à un deuxième noeud d'entrée d'un autre étage de conversion. En d'autres termes, le courant continu est généré sur le noeud de sortie d'un étage de conversion qui n'est pas connecté à un deuxième noeud d'entrée d'un autre étage de conversion.

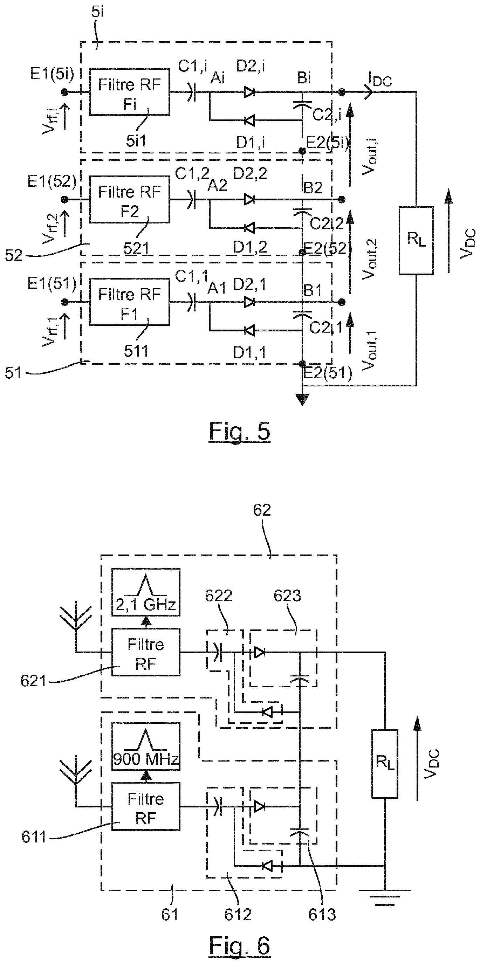

La figure 5 illustre l'architecture de la solution proposée pour un dispositif de conversion comprenant i étages de conversion référencés 51, 52 et 5i.

Chaque étage de conversion est composé d'un module de filtrage, d'un module de décalage de tension et d'un module de rectification de tension tels que décrit précédemment.

Le dispositif de conversion illustré en figure 5 permet de générer un courant continu $I_{DC}$ permettant d'alimentant une charge $R_L$, connectée entre le noeud de sortie Bi du i-ème étage de conversion 5i et le deuxième noeud d'entrée E2(51) du premier étage de conversion 51, qui est relié à la masse.

Plus précisément, le premier étage de conversion 51 comprend deux noeuds d'entrée E1(51) et E2(51), un noeud intermédiaire A1, et un noeud de sortie B1. Le deuxième noeud d'entrée E2(51) est connecté à une tension de référence, par exemple la masse. Ce premier étage de conversion 51 comprend un premier module de filtrage 511, centré sur la fréquence F1. Si on note $V_{rf,1}$ la tension AC induite au premier noeud d'entrée EI(51), à l'entrée du module de filtrage 511, alors le module de décalage de tension comprenant le premier condensateur C1,1 et la première diode D1,1 déplace la tension $V_{rf,1}$ jusqu'au noeud intermédiaire A1. Par la suite, le module de rectification de tension comprenant le deuxième condensateur C2,1 et la deuxième diode D2,1 rectifie la tension au noeud intermédiaire A1 pour obtenir une tension continue DC au noeud de sortie B1, notée $V_{out,1}$.

Le deuxième étage de conversion 52 comprend deux noeuds d'entrée E1(52) et E2(52), un noeud intermédiaire A2, et un noeud de sortie B2. Le deuxième noeud d'entrée E2(52) est connecté au noeud de sortie B1 du premier étage de conversion 51. Ce deuxième étage de conversion 52 comprend un deuxième module de filtrage 521, centré sur la fréquence F2. Si on note $V_{rf,2}$ la tension AC induite au premier noeud d'entrée E1(52), à l'entrée du module de filtrage 521, alors le module de décalage de tension comprenant le premier condensateur C1,2 et la première diode D1,2 déplace la tension $V_{rf,2}$ jusqu'au noeud intermédiaire A2. Par la suite, le module de rectification de tension comprenant le deuxième condensateur C2,2 et la deuxième diode D2,2 rectifie la tension au noeud intermédiaire A2 pour obtenir une tension continue DC au noeud de sortie B2, notée $V_{out,2}$.

Le i-ème étage de conversion 5i comprend deux noeuds d'entrée E1(5i) et E2(5i), un noeud intermédiaire Ai, et un noeud de sortie Bi. Le deuxième noeud d'entrée E2(5i) est connecté au noeud de sortie B(i-1) de l'étage de conversion (i-1). Ce i-ème étage de conversion 5i comprend un i-ème module de filtrage 5i1, centré sur la fréquence Fi. Si on note $V_{rf,i}$ la tension AC induite au premier noeud d'entrée E1(5i), à l'entrée du module de filtrage 5i1, alors le module de décalage de tension comprenant le premier condensateur C1,i et la première diode Dl,i déplace la tension $V_{rf,i}$ jusqu'au noeud intermédiaire Ai. Par la suite, le module de rectification de tension comprenant le deuxième condensateur C2,i et la deuxième diode D2,i rectifie la tension au noeud intermédiaire Ai pour obtenir une tension continue DC au noeud de sortie Bi, notée $V_{out,i}$.

Selon l'exemple proposé, le premier étage de conversion 51 est référencé à la masse (deuxième noeud d'entrée E2(51) connecté à la masse) et le i-ème étage de conversion 5i est référencé par rapport au (i-l)ème étage de conversion (deuxième noeud d'entrée E2(5i) connecté au noeud de sortie de l'étage de conversion (i-1)).

Chaque étage de conversion forme donc une antenne redresseuse ou rectenna.

On note que les premiers noeuds d'entrée E1(51), E1(52), E1(5i) de chaque étage de conversion peuvent être connectés chacun à une antenne de réception distincte, apte à recevoir un signal radiofréquence dans la bande de fréquence associée à l'étage de conversion considérée. En variante, les premiers noeuds d'entrée E1(51), E1(52), E1(5i) de chaque étage de conversion peuvent être connectés à une seule antenne, par exemple une antenne large bande, apte à recevoir des signaux radiofréquences dans les bandes de fréquence associées aux différents étages de conversion. On définit ainsi une structure plus compacte qu'une structure reposant sur l'utilisation de plusieurs antennes de réception « directives », adaptée chacune à une bande de fréquence spécifique. Selon encore une autre variante, les premiers noeuds d'entrée E1(51), E1(52), E1(5i) sont directement connectés (par liaison filaire par exemple) à une ou plusieurs sources générant un signal radiofréquence.

En particulier, on note que si un ou plusieurs étages de conversion ne sont pas alimentés par une tension $V_{rf,i}$,

ces étages ne vont pas perturbés les autres étages de conversion alimentés par une tension $V_{rf,i}$ grâce à la sortie différentielle $V_{out,i}$ de chaque étage de conversion et des deuxième condensateurs C2i qui maintiennent le niveau DC.

Le courant continu $I_{DC}$ est généré sur le noeud de sortie Bi de l'étage de conversion i, puisque le noeud de sortie Bi n'est pas connecté à un deuxième noeud d'entrée d'un autre étage de conversion. La tension totale obtenue $V_{DC}$ est la somme des contributions $V_{out,i}$ des différents étages de conversion, comme démontré ci-après.

La solution technique proposée permet donc d'avoir un système large bande et d'additionner les tensions DC obtenues pour chaque bande de fréquence sans pertes de tensions en sortie avec une puissance incidente faible, de l'ordre de -30 dBm. En effet, l'invention requiert deux fois moins de diodes que la mise en oeuvre d'un redresseur de type Greinacher. De plus, il est à noter que le nombre de bande de fréquence, i.e. le nombre d'étages de conversion n'est pas limité.

*5.2 Expression analytique de la solution proposée*

On présente ci-après l'expression analytique de la solution proposée, permettant notamment de démontrer que la tension totale obtenue $V_{DC}$ est la somme des contributions $V_{out,i}$ des différents étages de conversion.

On considère pour ce faire que chaque étage de conversion est composé d'un module de filtrage, d'un module de décalage de tension comprenant un premier condensateur et une première diode, et d'un module de rectification de tension comprenant un deuxième condensateur et une deuxième diode.

On suppose que les condensateurs (capacités) du dispositif de conversion sont parfaits et leur fonctionnement idéal : ils laissent passer le signal radiofréquence et bloquent le courant continu.

On suppose par ailleurs que les diodes d'un même étage présentent des tensions de seuil similaires et sont de type diode Schottky, modélisées par une loi exponentielle.

Le courant $I_d$ dans les diodes s'écrit alors :

$$I_d = I_s \left( \exp\left( \frac{V_{diode}}{V_T} - 1 \right) \right) \qquad (1)$$

avec :

$I_s$ une constante spécifique au type de diode considéré ;
$V_T$ la tension seuil de la diode considérée ;
$V_{diode}$ la tension aux bornes de la diode considérée.

Dans l'équation (1), le terme $V_{diode}$ représentant la tension aux bornes de chaque diode peut s'écrire :

$$V_{diode} = V_{appliquée} + V_{rf} = V_{appliquée} + \left| V_{rf} \right| \cos\left( \omega t \right) \qquad (2)$$

La tension $V_{appliquée}$ appliquée à la diode en tenant compte de la résistance série $R_s$ de la diode peut s'exprimer sous la forme suivante :

$$V_{appliquée} = V_{pola} - R_s I_{DC} \qquad (3).$$

On suppose que les capacités Ci agissent comme des capacités de découplage : elles empêchent le courant continu de circuler et affectent peu l'onde incidente d'amplitude $V_{rf,i}$, présente à l'entrée de chaque étage de conversion, encore appelée tension d'entrée.

Si toutes les diodes sont identiques, leur polarisation statique $V_{pola}$ est calculée en fonction de la tension DC de l'étage de conversion précédent.

Ainsi, on a :

$$V_{pola} = -\frac{1}{2}\left( V_{out,i-1} - V_{out,i} \right) \qquad (4)$$

$$V_{diode,i} = -V_{out,i-1} - R_s I_{DC} + \left| V_{rf,i} \right| \cos(\omega t) \qquad (5)$$

Le calcul du courant traversant chaque diode peut s'effectuer grâce aux fonctions de Bessel qui permettent le développement du terme exponentiel :

$$\exp\left( x \cos(\omega t) \right) = B_0(x) + 2 \sum B_n(x) \cos(n\omega t) \qquad (6)$$

Ainsi, on peut isoler le terme continu du courant traversant les diodes :

$$I_d = I_s \left( \exp\left( \frac{V_{diode,i}}{V_T} - 1 \right) \right)$$

$$I_d = I_s \left( \exp\left( \frac{V_{appliquée}}{V_T} \right) \exp\left( \frac{\left| V_{rf,i} \right| \cos(\omega t)}{V_T} \right) - 1 \right)$$

$$I_d = I_s \left( \exp\left( \frac{V_{appliquée}}{V_T} \right) \left( B_0\left( \frac{\left| V_{rf,i} \right|}{V_T} \right) + 2 \sum B_n\left( \frac{\left| V_{rf,i} \right|}{V_T} \right) \cos(\omega t) \right) - 1 \right) \qquad (7)$$

Ainsi, on a :

$$I_{DC} = I_s \left( \exp\left( \frac{V_{appliquée}}{V_T} \right) \left( B_0\left( \frac{\left| V_{rf,i} \right|}{V_T} \right) \right) - 1 \right) \qquad (8)$$

En outre, il est possible d'utiliser l'expression approchée suivante pour $B_0$ :

$$B_0(x) = \frac{\exp(x)}{\sqrt{2\pi x}} \qquad (9)$$

On obtient ainsi l'expression suivante pour le courant $I_{DC}$ :

$$I_{DC} \approx I_s \left( \exp\left( \frac{V_{appliquée}}{V_T} \right) \frac{\exp\left( \frac{\left| V_{rf,i} \right|}{V_T} \right)}{\sqrt{2\pi \frac{\left| V_{rf,i} \right|}{V_T}}} \right) \qquad (10)$$

L'équation (10) permet d'obtenir une relation reliant le point de polarisation en sortie du dispositif de conversion aux amplitudes des tensions incidentes $\left| V_{rf,i} \right|$ :

$$\frac{|V_{rf,i}|}{V_T} = \frac{\ln\left(2\pi\frac{|V_{rf,i}|}{V_T}\right)}{2} + \ln\left(\frac{I_{DC}}{I_s}\right) - \frac{V_{pola}}{V_T} + \frac{R_s I_{DC}}{V_T} \qquad (11)$$

Ainsi :

$$|V_{rf,i}| - \frac{V_T \ln\left(2\pi\frac{|V_{rf,i}|}{V_T}\right)}{2} = V_T \ln\left(\frac{I_{DC}}{I_s}\right) - \frac{1}{2}\left(V_{out,i-1} - V_{out,i}\right) + R_s I_{DC} \qquad (12)$$

d'où :

$$\frac{V_{out,i}}{2} + V_T \ln\left(\frac{V_{out,i}}{R_L I_s}\right) + \frac{R_s V_{out,i}}{R_L} = \frac{1}{2}V_{out,i-1} + |V_{rf,i}| - \frac{V_T \ln\left(2\pi\frac{|V_{rf,i}|}{V_T}\right)}{2} \qquad (13)$$

L'équation (13) est l'expression analytique qui décrit le comportement du dispositif de conversion. En effet, elle relie les paramètres de la diode et la tension DC de sortie $V_{out,i-1}$ à l'amplitude de la tension d'entrée $V_{rf,i}$ du i-ème étage de conversion. Cette expression confirme que les sorties DC des différents étages de conversion (i.e. des différentes rectennas) sont correctement sommées.

*5.3 Résultats de simulation*

La mise en oeuvre de dispositifs de conversion comprenant soit un étage de conversion, soit deux étages de conversion, soit trois étages de conversion, a été simulée. Le tableau ci-après présente les tensions appliquées en entrée/obtenues en sortie au niveau des différents noeuds du dispositif de conversion, en se basant sur les notations de la figure 5 :

| Nombre d'étages | Vrf,1 (V) | Vrf,2 (V) | Vrf,3 (V) | Vout,1 (V) | Vout,2 (V) | Vout,3 (V) | $V_{DC}$ (V) |
|---|---|---|---|---|---|---|---|
| 1 | 0,65 | | | 0,86 | | | 0,86 |
| 2 | 0,6 | 0,6 | | 0,75 | 0,73 | | 1,475 |
| 3 | 0,55 | 0,55 | 0,55 | 0,5 | 0,8 | 0,6 | 1,9 |

On constate que pour un dispositif de conversion comprenant deux étages de conversion alimentés chacun par une même tension d'entrée (Vrf,1 = Vrf,2), la tension de sortie totale, $V_{DC}$, est deux fois plus élevée que la tension de sortie du premier étage de conversion, Vout,1.

La figure 6 illustre plus précisément un exemple de circuit électrique pour la simulation de la conversion de l'énergie radiofréquence transportée dans deux bandes de fréquences distinctes. Le dispositif de conversion d'énergie radiofréquence en courant continu illustré en figure 6 comprend donc deux étages de conversion. Par exemple, le premier étage de conversion 61 comprend un filtre radiofréquence 611 centré sur la fréquence 0,9 GHz, permettant de récupérer l'énergie émise dans la bande GSM900, un module de décalage de tension 612 comprenant un premier condensateur C1,1 et une première diode D1,1, et un module de rectification de tension 613 comprenant un deuxième condensateur C2,1 et un deuxième diode D2,1. Le deuxième étage de conversion 62 comprend un filtre radiofréquence 621 centré sur la fréquence 2,1 GHz, permettant de récupérer l'énergie émise dans la bande UMTS2100, un module de décalage de tension 622 comprenant un premier condensateur C1,2 et une première diode D1,2, et un module de rectification de tension 623 comprenant un deuxième condensateur C2,2 et un deuxième diode D2,2. Les valeurs des diodes et des condensateurs peuvent être choisies en fonction de la charge que l'on souhaite alimenter. Par exemple, les diodes D1,1, D2,1, D2,1 et D2,2 présentent une tension de seuil de l'ordre de 150 mV et les condensateurs présentent une valeur de l'ordre de 15 pF pour les premiers condensateurs C1,1 et C1,2 et 68 pF pour les deuxièmes condensateurs C2,1 et C2,2.

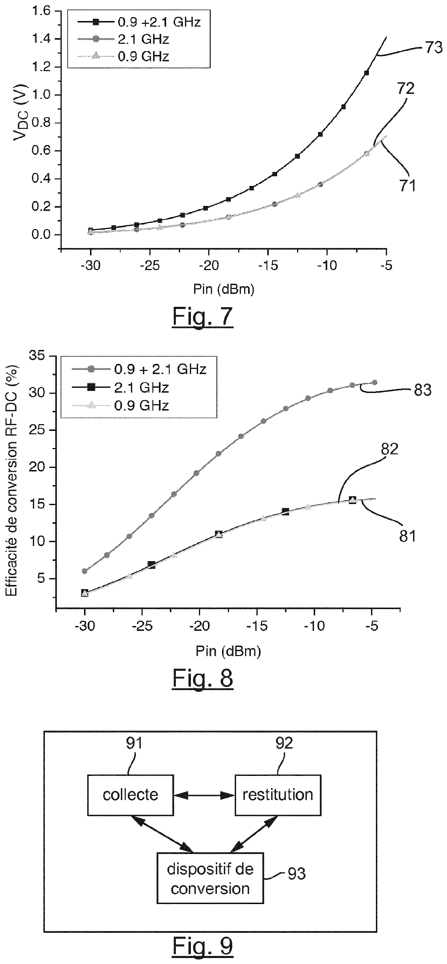

La figure 7 illustre la tension de sortie $V_{DC}$ obtenue en sortie du dispositif de conversion de la figure 6, en fonction de la puissance incidente Pin, lorsque :

- seul le premier étage de conversion 61 est activé (i.e. lorsqu'un signal radiofréquence est reçu uniquement dans la bande de fréquence autour de la fréquence centrale 0,9 GHz), courbe 71 ;
- seul le deuxième étage de conversion 62 est activé (i.e. lorsqu'un signal radiofréquence est reçu uniquement dans la bande de fréquence autour de la fréquence centrale 2,1 GHz), courbe 72 ;
- les deux étages de conversion 61 et 62 sont activés (i.e. lorsque des signaux radiofréquences sont reçus dans les deux bandes de fréquence), courbe 73.

Lorsque les deux étages reçoivent une puissance incidente supérieure à -30 dBm, la tension de sortie $V_{DC}$ obtenue en sortie du dispositif de conversion est doublée par rapport à la tension de sortie $V_{DC}$ obtenue lorsqu'un seul étage reçoit une puissance incidente supérieure à - 30 dBm (i.e. lorsqu'une seule bande de fréquence est activée).

La figure 8 illustre l'efficacité de conversion radiofréquence en courant continu, en pourcentage, du dispositif de conversion de la figure 6, en fonction de la puissance incidente Pin, lorsque :

- seul le premier étage de conversion 61 est activé (i.e. lorsqu'un signal radiofréquence est reçu uniquement dans la bande de fréquence autour de la fréquence centrale 0,9 GHz), courbe 81 ;
- seul le deuxième étage de conversion 62 est activé (i.e. lorsqu'un signal radiofréquence est reçu uniquement dans la bande de fréquence autour de la fréquence centrale 2,1 GHz), courbe 82 ;
- les deux étages de conversion 61 et 62 sont activés (i.e. lorsque des signaux radiofréquences sont reçus dans les deux bandes de fréquence), courbe 83.

On constate à nouveau que lorsque les deux étages reçoivent une puissance incidente supérieure à -30 dBm, le rendement est doublé par rapport au rendement obtenu lorsqu'un seul étage reçoit une puissance incidente supérieure à -30 dBm (i.e. lorsqu'une seule bande de fréquence est activée).

Ces courbes de performances confirment que les tensions mesurées respectivement à 0,9 et 2,1 GHz sont correctement sommées et n'interfèrent pas les unes avec les autres, i.e. que la sortie d'un étage de conversion n'interfère pas avec la sortie d'un autre étage de conversion.

Par exemple, si le dispositif de conversion selon l'invention est située à 1 m des sources radiofréquences en marche, la puissance récupérée est de l'ordre de 15 $\mu$W. Or il est possible de calculer la puissance incidente en entrée du redresseur en fonction de la relation de Friis. On obtient une puissance incidente totale de l'ordre de 50uW. Ainsi le rendement du dispositif de conversion selon l'invention est de l'ordre de 30%, alors que pour une seule bande de fréquence il est de l'ordre de 15 %. On observe donc un gain sur le rendement avec un dispositif de conversion mettant en oeuvre plusieurs étages de conversion.

Le dispositif de conversion selon l'invention présente donc des performances améliorées par rapport aux techniques de l'art antérieur, en termes de tension DC de sortie, d'efficacité de conversion RF-DC ou bien de puissance minimum requise pour démarrer le circuit. De plus, les contributions DC de chaque bande de fréquence / étage de conversion ne sont pas perturbées les unes par rapport aux autres.

En particulier, par rapport aux redresseurs de type Greinacher selon l'art antérieur, l'activation du circuit selon l'invention requiert une puissance minimum de l'ordre -30 dBm alors les redresseurs selon l'art antérieur requièrent une puissance minimum de l'ordre -10 dBm. Ainsi, à puissance équivalente, l'efficacité de conversion du circuit selon l'invention est six fois plus élevée que celle des systèmes de l'art antérieur. De plus, le circuit selon l'invention repose sur l'utilisation de deux fois moins de composants que les architectures existantes, ce qui implique de plus faibles coûts de production.

Le courant généré $I_{DC}$ en sortie du dispositif de conversion, ou de manière équivalente la tension $V_{DC}$ générée en sortie du dispositif de conversion, peut être utilisé pour alimenter une charge, par exemple un capteur de température.

Un des avantages de l'invention réside donc dans le fait qu'elle permet d'alimenter directement des dispositifs électroniques avec l'énergie environnante, et peut notamment être utilisée pour recharger une pile/batterie d'un tel dispositif électronique.

La figure 9 illustre un exemple d'application de l'invention, pour l'alimentation d'un capteur, par exemple un thermomètre. Comme illustré sur cette figure, un tel capteur comprend des moyens de collecte de données 91, des moyens de restitution des données collectées 92 et un dispositif de conversion 93 d'énergie radiofréquence en courant continu tel que décrit ci-dessus.

En particulier, comme déjà indiqué, l'invention trouve notamment des applications dans le domaine de l'alimentation de capteurs filaire ou sans fil, par exemple dans le domaine du textile, médical, de la météo, du sport, de l'identification radiofréquence, de la téléphonie, de la surveillance, etc.

## Revendications

1. Dispositif de conversion d'énergie radiofréquence en courant continu, recevant en entrée au moins un signal radiofréquence et générant en sortie un courant continu apte à alimenter au moins une charge, **caractérisé en ce que** ledit dispositif de conversion comprend au moins deux étages de conversion (41) comprenant chacun :

   - un module de filtrage radiofréquence (411), connecté à un premier noeud d'entrée (E1) dudit étage de conversion, configuré pour filtrer un desdits au moins un signal radiofréquence ;
   - un module de décalage de tension (412), connecté entre un deuxième noeud d'entrée (E2) dudit étage de conversion, ledit module de filtrage radiofréquence (411) et un noeud intermédiaire (A) dudit étage de conversion, configuré pour déplacer une tension présente au niveau dudit premier (E1) noeud d'entrée sur ledit noeud intermédiaire (A) ;
   - un module de rectification de tension (413), connecté entre ledit noeud intermédiaire (A), ledit deuxième noeud d'entrée (E2) et un noeud de sortie (B) dudit étage de conversion, configuré pour rectifier la tension dudit noeud intermédiaire (A) et délivrer une tension rectifiée sur ledit noeud de sortie (B) ;

   **en ce que**, pour le premier étage de conversion, ledit deuxième noeud d'entrée (E2) est connecté à une tension de référence, et pour un étage de conversion supérieur, ledit deuxième noeud d'entrée (E2) est connecté au noeud de sortie d'un étage de conversion inférieur,
   et **en ce que** ledit courant continu est généré sur le noeud de sortie (B) du dernier étage de conversion.

2. Dispositif de conversion selon la revendication 1, **caractérisé en ce que** ledit module de décalage de tension (412) met en oeuvre un premier condensateur (C1,i), connecté entre ledit module de filtrage et ledit noeud intermédiaire, et une première diode (D1,i), connectée en sens direct entre ledit deuxième noeud d'entrée et ledit noeud intermédiaire, et **en ce que** ledit module de rectification (413) de tension met en oeuvre un deuxième condensateur (C2,i), connecté entre ledit deuxième noeud d'entrée et ledit noeud de sortie, et une deuxième diode (D2,i), connectée en sens direct entre ledit noeud intermédiaire et ledit noeud de sortie.

3. Dispositif de conversion selon la revendication 2, **caractérisé en ce que** lesdites première et deuxième diodes et lesdits premier et deuxième condensateurs sont des composants montés en surface.

4. Dispositif de conversion selon l'une quelconque des revendications 2 et 3, **caractérisé en ce que** lesdites première et deuxième diodes présentent des valeurs sensiblement identiques.

5. Dispositif de conversion selon l'une quelconque des revendications 2 à 4, **caractérisé en ce que** lesdites première et deuxième diodes sont des diodes Schottky.

6. Dispositif de conversion selon l'une quelconque des revendications 1 à 5, **caractérisé en ce qu'**il comprend au moins une antenne de réception dudit au moins un signal radiofréquence.

7. Dispositif de conversion selon la revendication 6, **caractérisé en ce que** ladite antenne de réception est une antenne large bande.

8. Dispositif de conversion selon l'une quelconque des revendications 1 à 7, **caractérisé en ce que** ledit module de filtrage radiofréquence comprend un filtre radiofréquence appartenant au groupe comprenant :

   - un filtre passe-bande centré sur la fréquence 900MHz ;
   - un filtre passe-bande centré sur la fréquence 1800MHz ;
   - un filtre passe-bande centré sur la fréquence 2,1GHz ;
   - un filtre passe-bande centré sur la fréquence 2,4GHz.

9. Dispositif de conversion selon l'une quelconque des revendications 1 à 8, **caractérisé en ce que** ledit au moins un signal radiofréquence est reçu via une liaison filaire.

10. Capteur comprenant des moyens de collecte de données (91) et des moyens de restitution des données collectées (92),

   **caractérisé en ce qu'**il comprend également un dispositif de conversion (93) d'énergie radiofréquence en courant continu selon l'une quelconque des revendications 1 à 9.

**Patentansprüche**

1. Vorrichtung zur Umwandlung von Hochfrequenzenergie in Gleichstrom, die am Eingang mindestens ein Hochfrequenzsignal empfängt und am Ausgang einen Gleichstrom erzeugt, der in der Lage ist, mindestens eine Last zu speisen,
   **dadurch gekennzeichnet, dass** die Vorrichtung zur Umwandlung mindestens zwei Umwandlungsstufen (41) umfasst, die jede umfassen:

   - ein an einen ersten Eingangsknoten (E1) der Umwandlungsstufe angeschlossenes Hochfrequenz-Filtermodul (411), das dafür ausgebildet ist, eines der mindestens einen Hochfrequenzsignale zu filtern;
   - ein zwischen einem zweiten Eingangsknoten (E2) der Umwandlungsstufe, dem Hochfrequenz-Filtermodul (411) und einem Zwischenknoten (A) der Umwandlungsstufe angeschlossenes Spannungsverschiebungsmodul (412), das dafür ausgebildet ist, eine im Bereich des ersten (E1) Eingangsknotens vorhandene Spannung am Zwischenknoten (A) zu verschieben;
   - ein zwischen dem Zwischenknoten (A), dem zweiten Eingangsknoten (E2) und einem Ausgangsknoten (B) der Umwandlungsstufe angeschlossenes Spannungsgleichrichtmodul (413), das dafür ausgebildet ist, die Spannung des Zwischenknotens (A) gleichzurichten und am Ausgangsknoten (B) eine gleichgerichtete Spannung zu liefern;

   dadurch, dass bei der ersten Umwandlungsstufe der zweite Eingangsknoten (E2) an eine Referenzspannung angeschlossen ist, und bei einer höheren Umwandlungsstufe der zweite Eingangsknoten (E2) an den Ausgangsknoten einer unteren Umwandlungsstufe angeschlossen ist,
   und dadurch, dass der Gleichstrom am Ausgangsknoten (B) der letzten Umwandlungsstufe erzeugt wird.

2. Vorrichtung zur Umwandlung nach Anspruch 1, **dadurch gekennzeichnet, dass** das Spannungsverschiebungsmodul (412) einen ersten Kondensator (C1,i) einsetzt, der zwischen dem Filtermodul und dem Zwischenknoten angeschlossen ist, und eine erste Diode (D1,i), die in Durchlassrichtung zwischen dem zweiten Eingangsknoten und dem Zwischenknoten angeschlossen ist, und dadurch, dass das Spannungsgleichrichtmodul (413) einen zweiten Kondensator (C2,i) einsetzt, der zwischen dem zweiten Eingangsknoten und dem Ausgangsknoten angeschlossen ist, und eine zweite Diode (D2,i), die in Durchlassrichtung zwischen dem Zwischenknoten und dem Ausgangsknoten angeschlossen ist.

3. Vorrichtung zur Umwandlung nach Anspruch 2, **dadurch gekennzeichnet, dass** die erste und zweite Diode und der erste und zweite Kondensator oberflächenmontierte Bauteile sind.

4. Vorrichtung zur Umwandlung nach einem der Ansprüche 2 und 3, **dadurch gekennzeichnet, dass** die erste und zweite Diode im Wesentlichen identische Werte aufweisen.

5. Vorrichtung zur Umwandlung nach einem der Ansprüche 2 bis 4, **dadurch gekennzeichnet, dass** die erste und zweite Diode Schottky-Dioden sind.

6. Vorrichtung zur Umwandlung nach einem der Ansprüche 1 bis 5, **dadurch gekennzeichnet, dass** sie mindestens eine Antenne zum Empfangen des mindestens einen Hochfrequenzsignals umfasst.

7. Vorrichtung zur Umwandlung nach Anspruch 6, **dadurch gekennzeichnet, dass** die Empfangsantenne eine Breitbandantenne ist.

8. Vorrichtung zur Umwandlung nach einem der Ansprüche 1 bis 7, **dadurch gekennzeichnet, dass** das Hochfrequenz-Filtermodul einen Hochfrequenzfilter umfasst, der zur Gruppe gehört, welche umfasst:

- einen auf die Frequenz 900 MHz zentrierten Bandpassfilter;
- einen auf die Frequenz 1800 MHz zentrierten Bandpassfilter;
- einen auf die Frequenz 2,1 GHz zentrierten Bandpassfilter;
- einen auf die Frequenz 2,4 GHz zentrierten Bandpassfilter.

9. Vorrichtung zur Umwandlung nach einem der Ansprüche 1 bis 8, **dadurch gekennzeichnet, dass** das mindestens eine Hochfrequenzsignal über eine drahtgebundene Verbindung empfangen wird.

10. Sensor, der Mittel zum Sammeln von Daten (91) und Mittel zum Wiedergeben der gesammelten Daten (92) umfasst, **dadurch gekennzeichnet, dass** er ebenfalls eine Vorrichtung zur Umwandlung ((93) von Hochfrequenzenergie in Gleichstrom nach einem der Ansprüche 1 bis 9 umfasst.

**Claims**

1. Device for converting radiofrequency energy into direct current, receiving at the input at least one radiofrequency signal and generating at the output, a direct current able to supply at least one charge, **characterised in that** said conversion device comprises at least two conversion stages (41) each comprising:

   - a radiofrequency filtering module (411), connected to a first input node (E1) of said conversion stage, configured to filter one of said at least one radiofrequency signal;
   - a voltage offset module (412), connected between a second input node (E2) of said conversion stage, said radiofrequency filtering module (411) and an intermediate node (A) of said conversion stage, configured to offset a voltage present at the level of said first (E1) input node onto said intermediate node (A);
   - a voltage rectification module (413), connected between said intermediate node (A), said second input node (E2) and an output node (B) of said conversion stage, configured to rectify the voltage of said intermediate node (A) and deliver a rectified voltage onto said output node (B);

   **in that**, for the first conversion stage, said second input node (E2) is connected to a reference voltage, and for a higher conversion stage, said second input node (E2) is connected to the output node of a lower conversion stage, and **in that** said direct current is generated on the output node (B) of the last conversion stage.

2. Conversion device according to claim 1, **characterised in that** said voltage offset module (412) implements a first capacitor (C1,i), connected between said filtering module and said intermediate node, and a first diode (D1,i), forwardly connected between said second input node and said intermediate node, and **in that** said voltage correction module (413) implements a second capacitor (C2,i), connected between said second input node and said output node, and a second diode (D2,i), forwardly connected between said intermediate node and said output node.

3. Conversion device according to claim 2, **characterised in that** said first and second diodes and said first and second capacitors are surface mounted- components.

4. Conversion device according to any one of claims 2 and 3, **characterised in that** said first and second diodes have substantially identical values.

5. Conversion device according to any one of claims 2 to 4, **characterised in that** said first and second diodes are Schottky diodes.

6. Conversion device according to any one of claims 1 to 5, **characterised in that** it comprises at least one antenna for receiving said at least one radiofrequency signal.

7. Conversion device according to claim 6, **characterised in that** said receiving antenna is a broadband antenna.

8. Conversion device according to any one of claims 1 to 7, **characterised in that** said radiofrequency filtering module comprises a radiofrequency filter belonging to the group comprising:

   - a bandpass filter centred on the frequency 900 MHz;
   - a bandpass filter centred on the frequency 1800 MHz;
   - a bandpass filter centred on the frequency 2.1 GHz;

  - a bandpass filter centred on the frequency 2.4 GHz.

9. Conversion device according to any one of claims 1 to 8, **characterised in that** said at least one radiofrequency signal is received via a wired connection.

10. Sensor comprising means for collecting data (91) and means for returning the data collected (92), **characterised in that** it also comprises a device for converting (93) radiofrequency energy into direct current according to any one of claims 1 to 9.

Fig. 1

Fig. 2

Fig. 3A

Fig. 3B

Fig. 4

Fig. 5

Fig. 6

Fig. 7

Fig. 8

Fig. 9

## RÉFÉRENCES CITÉES DANS LA DESCRIPTION

**Documents brevets cités dans la description**

- US 20110242863 A1

**Littérature non-brevet citée dans la description**

- **V.KUHN ; F.SEGUIN ; C.LAHUEC ; C.PERSON.** A multi-tone RF energy harvester in body sensor area network context. *IEEE LAPC conference,* Novembre 2013